Europäisches Patentamt

European Patent Office

Office européen des brevets

(19)

(11) Veröffentlichungsnummer : **0 308 391 B1**

(12) **EUROPÄISCHE PATENTSCHRIFT**

(45) Veröffentlichungstag der Patentschrift :
08.01.92 Patentblatt 92/02

(51) Int. Cl.⁵ : **B60G 21/04**

(21) Anmeldenummer : 88890223.6

(22) Anmeldetag : 01.09.88

(54) Abstützvorrichtung für einen Fahrzeug-Achsstabilisator.

(30) Priorität : 22.09.87 AT 2392/87

(43) Veröffentlichungstag der Anmeldung :
22.03.89 Patentblatt 89/12

(45) Bekanntmachung des Hinweises auf die
Patenterteilung :
08.01.92 Patentblatt 92/02

(84) Benannte Vertragsstaaten :
DE ES FR GB IT NL SE

(56) Entgegenhaltungen :
DE-A- 2 842 429
FR-A- 2 529 838
US-A- 2 517 611
US-A- 3 448 994

(73) Patentinhaber : STEYR NUTZFAHRZEUGE
Aktiengesellschaft
Schönauerstrasse 5
A-4400 Steyr (AT)

(72) Erfinder : Täuber, Reinhold
Im Hammergrund 21
A-4400 Steyr (AT)

## Beschreibung

Die Erfindung bezieht sich auf eine Abstützvorrichtung für einen Fahrzeug-Achsstabilisator, mit einem in Fahrtrichtung schwenkbaren Verbindungslenker zwischen Fahrgestell und Stabilisator (siehe z.B. FR-A-2529838 oder DE-A-2842429).

Die meist als U-förmig gebogene Torsionsfedern vorgesehenen Stabilisatoren sollen vor allem den Wankneigungen des Fahrzeuges bei Kurvenfahrt entgegenwirken, wozu sie einerseits an der Fahrzeugachse, anderseits am Fahrgestell angelenkt sind. Da die Fahrzeugachse aufgrund ihrer Federung eine Einfederbewegung ausführt, die nicht nur eine vertikale, sondern auch eine in Fahrtrichtung liegende Komponente aufweist, muß die fahrgestellseitige Abstützung des Stabilisators diese Längsbewegung aufnehmen können, wozu bisher Verbindungslenker in Form von schwenkbaren Laschen eingesetzt werden. Die über ein gummielastisches Lagerelement am Stabilisator angreifenden Laschen erfordern daher auch fahrgestellseitig eine bewegliche Lagerstelle, beispielsweise ein Gummigelenk oder eine Bolzen-Büchsenlagerung, die allerdings nicht nur aufwendig, sondern auch einem starken Verschleiß unterworfen ist und daher auch oft durch auftretende Klappergeräusche, übermäßige Lagerspiele u.dgl. Anlaß zu Beanstandungen und Reparaturen gibt.

Der Erfindung liegt daher die Aufgabe zugrunde, diese Mängel zu beseitigen und eine Abstützvorrichtung der eingangs geschilderten Art zu schaffen, die sich sowohl durch ihre Einfachheit als auch durch ihre Funktionstüchtigkeit und Verschleißfestigkeit auszeichnet.

Die Erfindung löst diese Aufgabe dadurch, daß der Verbindungslenker als am Fahrgestell eingespannte Biegefeder ausgebildet ist. Für die Stabilisatorabstützung am Fahrgestellt gibt es daher keine bewegliche Lagerstelle mehr, da die Biegefeder starr am Fahrgestell befestigt wird und eine Schwenkbewegung in Fahrtrichtung allein aufgrund ihrer Biegefähigkeit ausübt. Ein einfaches Federblatt, das durch eine entsprechende Dimensionierung den auftretenden Druckbelastungen ohne Knickgefahr standhält und einen auf die mögliche Schwenkbewegung angepaßten zulässigen Biegebereich aufweist, genügt als Verbindungslenker, der aufwandsarm am Fahrgestell zu befestigen ist und seine Stützfunktion für den Stabilisator mit vollem Längsbewegungsausgleich auch bei gelenkslosem Ansatz am Fahrgestell einwandfrei erfüllt.

Eine besonders zweckmäßige Konstruktion ergibt sich dabei, wenn erfindungsgemäß die aus einem Federstahlband bestehende Biegefeder an ihrem freien Ende zu einer U-förmigen Halterung umgebogen ist, in der ein gummielastischer Lagerkörper für den Stabilisator sitzt, da so die Biegefeder gleichzeitig auch als eine Art Lagergehäuse für das Stabilisatorlager genützt werden kann.

In der Zeichnung ist der Erfindungsgegenstand in einem Ausführungsbeispiel rein schematisch veranschaulicht, und zwar zeigen

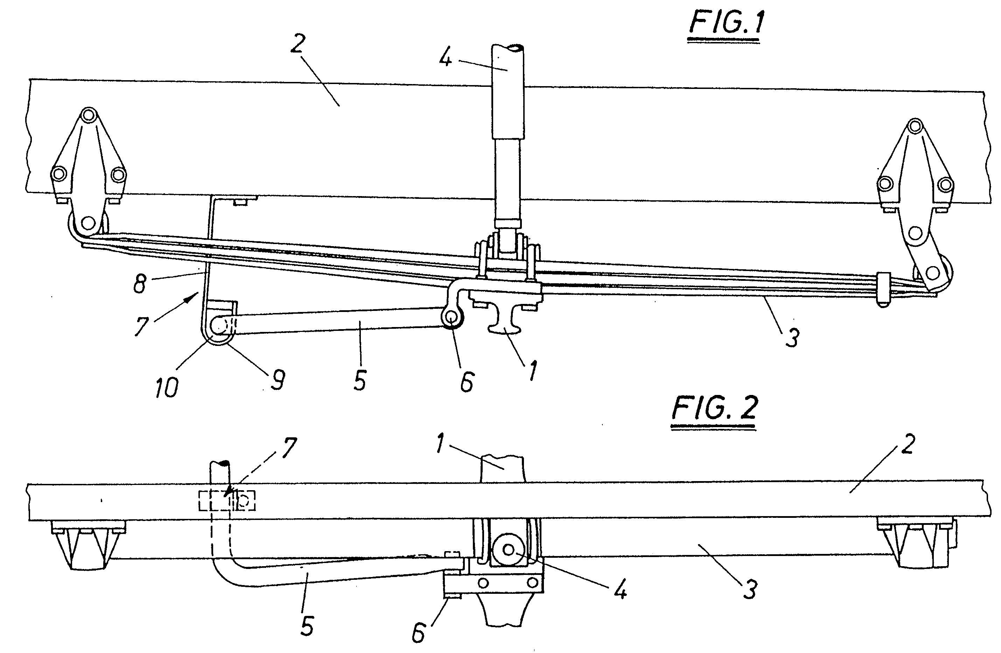

Fig. 1 und 2 eine erfindungsgemäße Abstützvorrichtung in Seitenansicht und Draufsicht.

Eine Fahrzeugachse 1 ist am durch einen Rahmenlängsträger angedeuteten Fahrgestell 2 über Blattfedern 3 und Stoßdämpfer 4 aufgehängt, wobei zur Verringerung der Wankneigung bei Kurvenfahrten ein U-Form-Stabilisator 5 vorgesehen ist. Dieser beiderends über gummielastische Lager 6 an der Achse 1 angreifende Stabilisator 5 wird im Bereich seines Mittelteiles an zwei Stellen über Verbindugnslenker 7 am Fahrgestell 2 abgestützt, welche Verbindungslenker 7 als Biegefedern ausgebildet sind und aus einem Federstahlband 8 bestehen. Dieses Federstahlband 8 ist starr am Fahrgestell 2 festgeschraubt und kann durch seine Biegefähigkeit die in Fahrtrichtung auftretenden Längsbewegungen des Stabilisators 5 aufgrund einer Einfederung der Achse 1 aufnehmen und ausgleichen. Da Federstahlband 8 ist an seinem freien Ende zu einer U-förmigen Halterung 9 umgebogen, in der ein gummielastischer Lagerkörper 10 für den Stabilisator 5 sitzt.

Es entsteht eine besonders einfache, rationell herstellbare, funktionstüchtige und langlebige Abstützung des Stabilisators 5.

## Patentansprüche

1. Abstützvorrichtung für einen Fahrzeug-Achsstabilisator, mit einem in Fahrtrichtung schwenkbaren Verbindugnslenker zwischen Fahrgestell und Stabilisator, dadurch gekennzeichnet, daß der Verbindungslenker (7) als am Fahrgestell (2) eingespannte Biegefeder (8) ausgebildet ist.

2. Abstützvorrichtung nach Anspruch 1, dadurch gekennzeichnet, daß die aus einem Federstahlband (8) bestehende Biegefeder an ihrem freien Ende zu einer U-förmigen Halterung (9) umgebogen ist, in der ein gummielastischer Lagerkörper (10) für den Stabilisator (5) sitzt.

## Claims

1. A supporting device for a vehicule axle-stabiliser, with a connecting guide-rod which is located between the chassis and the stabiliser and can be swivelled in the driving direction, characterised in that the connecting guide-rod (7) is formed as a spiral spring (8) clamped on the chassis (2).

2. A supporting device according to Claim 1, characterised in that the spiral spring, which consists of a spring steel band (8), is bent round at its free end to form a U-shaped mounting (9), in which a rubber elastic bearing body (10) for the stabiliser (5) is located.

## Revendications

1. Dispositif de support pour un stabilisateur d'essieu de véhicule comportant un bras de liaison pivotant dans la direction de déplacement, entre le châssis du véhicule et le stabilisateur, caractérisé en ce que le bras de liaison (7) est constitué par un ressort de flexion (8) solidaire du châssis (2) du véhicule (8).

2. Dispositif de support selon la revendication 1 caractérisé en ce que le ressort de flexion constitué par une lame d'acier à ressorts (8) est recourbé en forme de U à son extrémité libre pour constituer un support (9) qui reçoit un corps de palier (10) en caoutchouc élastique pour le stabilisateur (5).

FIG.1

FIG.2